# EUROPÄISCHE PATENTSCHRIFT

(11) **EP 1 670 671 B1**
(45) Veröffentlichungstag und Bekanntmachung des Hinweises auf die Patenterteilung: **18.06.2008**
(21) Anmeldenummer: 04786899.7
(22) Anmeldetag: 30.09.2004
(51) Int. Cl.: B61B 5/02, B61L 27/04, E01B 25/28

(54) **VOLLAUTOMATISCHES VERKEHRSSYSTEM**
FULLY AUTOMATIC TRAFFIC SYSTEM
SYSTEME DE TRANSPORT ENTIEREMENT AUTOMATIQUE

(30) Priorität: 02.10.2003 DE 10346188
(43) Veröffentlichungstag der Anmeldung: 21.06.2006
(73) Patentinhaber: Hasenfuss, Peter, 8280 Kreuzlingen (CH)
(72) Erfinder: Hasenfuss, Peter, 8280 Kreuzlingen (CH)
(74) Vertreter: Schuster, Gregor
(86) Internationale Anmeldenummer: PCT/DE2004/002188
(87) Internationale Veröffentlichungsnummer: WO 2005/032900

(56) Entgegenhaltungen:
- WO-A-03/006299
- DE-A1- 19 923 161
- DE-A1- 19 940 483
- DE-U1- 20 009 231
- US-A- 4 969 400
- US-A- 5 590 604

## Beschreibung

### Stand der Technik

Die Erfindung geht aus von einem Verkehrsystem nach der Gattung des Hauptanspruchs. Ein solches System ist aus der US 5 590 604 bzw. aus der WO 03/006299 bekannt. Um Personen oder Güter zu transportieren, werden bisher Systeme eingesetzt, wie beispielsweise PKW, Omnibus, LKW oder Schienenfahrzeuge, wobei diese Systeme grundsätzlich Einschränkungen erforderlich machen, entweder bezüglich der Individualität oder aber bezüglich des Energiebedarfs bei der Bereitstellung hoher Transportkapazität, da beispielsweise Pkws eine hohe Individualisierung des Personenverkehrs ermöglichen, diese jedoch nicht in geschlossener Formation zur Verringerung des Luftwiderstandes mit geringem Abstand hintereinander her fahren können, wie dies bei Schienenfahrzeugen von Hause aus der Fall ist. Schienenfahrzeuge, Omnibusse und LKWs weisen aber insbesondere den Nachteil auf, dass sie untereinander nicht kompatibel sind, um eine Kombination aus Individualverkehr und einem Transportverbund zur Bewegung mit möglichst gleichförmiger Geschwindigkeit zu gestatten.

Kombinationen aus beiden Transportsystemen, also solchen, welche sich auf ebenen Flächen individuell gelenkt fortbewegen, und Schienenfahrzeugen, sind bereits für Spezialaufgaben verwirklicht worden, wie beispielsweise für den Rohstoff- oder Teiletransport in Produktionshallen oder für den Personenverkehr zwischen beispielsweise Flughafen und Parkhaus. Diese Kombinationssysteme erlauben es bislang jedoch noch nicht, ein einzelnes Fahrzeug beliebig einem Verband anzugliedern und, nachdem dieses Einzelfahrzeug eine gewisse Wegstrecke mit dem Verband zurückgelegt hat, das Trennen des Einzelfahrzeugs vom Verband um dann dem jeweiligen Ziel entgegenzusteuern. Solche Kombinationssysteme basieren meist auf Straßenfahrzeugen oder straßentauglichen Fahrzeugen, welche über einen Lenkungseingriff verfügen, der ähnlich einer Spielzeugrennbahn über einen Hebelmechanismus über Rollen von einer Schiene, die den Verlauf der Fahrstrecke vorgibt, betätigt wird. Diese Systeme weisen jedoch allesamt den Nachteil auf, dass zum einen ein individuelles Ein- und Auskoppeln aus der Führung oder das Anschließen an einen bestehenden Verband in Verbindung mit einer individuellen Transportaufgabe nicht möglich ist und darüber hinaus Ab- und Verzweigungen nur mit einem sehr hohen konstruktiven Aufwand, insbesondere bei der Gestaltung der Weichen, verwirklicht werden können.

Es sind Konzepte für den Personennahverkehr bekannt (DE 196 23 244 A1), bei denen auf einer Betontrasse automatisch gesteuerte Fahrzeuge rollen, bei denen mittels einer Führung, die die Betontrasse einfasst, die Spurhaltung auf der Trasse verwirklicht wird. Nachteilig bei diesem Verfahren ist, dass ein individuelles Aus- und Einkoppeln nur unter erhöhtem konstruktiven Aufwand zur Überwindung der beidseitigen Führung der Betontrasse möglich ist, wobei besonders zu berücksichtigen ist, dass beispielsweise Aus- bzw. Einklinkpunkte mit präziser Maßhaltung in Betonteilen nur schwierig unterbringbar sind und durch die Verwendung einer geschlossenen Trasse eine flächige Versiegelung des Untergrunds stattfindet.

Es ist auch ein Bodentransportersystem mit berührungsloser induktiver Energieübertragung (DE 199 55 042 A1) bekannt, bei dem die Führung der automatisch fahrenden Fahrzeuge über einen Schlitz im Boden erfolgt, der allerdings außer der Führung keine weiteren Funktionen hat. Für die Energieübertragung zum Fahrzeug sind beidseitig des Schlitzes jeweils stromführende Litzen verlegt, welche über elektromagnetische Induktion Energie auf das Fahrzeug übertragen. Besonders nachteilig bei diesem Verfahren ist, dass speziell bei langen Fahrstrecken aufgrund der induktiven Energieübertragung große Energiemengen bei der Erzeugung eines instationären alternierenden elektromagnetischen Feldes entlang der Induktionslitzen verloren gehen, da letzten Endes nur an der Stelle, an der sich das Fahrzeug befindet, Energie dem lokalen elektromagnetischen Feld entzogen werden kann.

Es ist auch ein selbsttätiges autonom geführtes Transportfahrzeug bekannt (DE 41 27 298 A1), welches sich mittels einer vollautomatischen Steuerung auf ebener Fahrbahn bewegt. Die Energieversorgung erfolgt bei diesem Fahrzeug über eine Oberleitung wodurch speziell beim Streckenauf- und ausbau sehr hohe zusätzliche Kosten entstehen und darüber hinaus diese Oberleitung beim Auf- und Abladen der transportierten Güter besonders störend ist, zumal sie speziell beim Abheben mittels Gabelstapler, Kran oder ähnlichem eine große Gefahrenquelle für das Bedienpersonal darstellt. Als besonders nachteilig bei dieser Konstruktion erweist sich jedoch die Sicherung bei Ausfall der automatischen Steuerung, da sich das Fahrzeug auf ebener Fläche fortbewegt und somit in beliebiger Richtung bei Ausfall der Steuerung weiter rollen oder fahren könnte.

Es ist außerdem ein Verfahren zum selbsttätigen führerlosen Betrieb von Fahrzeugen bekannt (DE 33 15 051 C2), welches sich eines Steuersystems in einem Transportfahrzeug bedient, das sämtliche Steuerbefehle, die bei einer Erstfahrt manuell eingegeben werden, speichert, um dann identische Fahrten automatisch selbsttätig auszuführen. Bei diesem Verfahren ist weder eine Redundanz bei Ausfall der Steuerung berücksichtigt, noch wird das Transportfahrzeug von außen, beispielsweise entlang einer Schiene mit Energie versorgt.

Eine andere bekannte Technik für fahrerlose Transportfahrzeuge bedient sich einer Führungsschiene (DE 296 05 816 U1), in welche zur Lenkung ein senkrecht nach unten geführter Bolzen, der an einem Transportfahrzeug angebracht ist, eingreift, und an welcher beidseitig zur elektrischen Energieversorgung des Fahrzeugs jeweils ein stromführender Kontakt, der sich längs der Schiene erstreckt, angebracht ist, und welcher je nach Anordnung der Kontakte entweder horizontal oder vertikal vom Fahrzeug aus per Schleifkontakt abgegriffen wird.

Eine andere bekannte Technologie (DE 44 31516 A1) versucht, die Nutzung der Schiene durch den Individualverkehr mittels eines Hybridrades, welches sowohl Laufflächen für Eisenbahnschienen als auch eine Straßenbereifung aufweist, zu ermöglichen. Die Individualfahrzeuge können hierbei mittels Auffahrrampen selbsttätig auf die Schienen gesetzt werden und so die Schienen als Ausweichstrecke nutzen. Nachteilig ist bei dieser Technologie, dass keine Koppelung zwischen den Individualfahrzeugen möglich ist und somit ein Sicherheitsabstand zur Vermeidung von schweren Unfällen eingehalten werden muss und es sich als ganz besonders nachteilig erweist, dass sich durch die Gestaltung der Fahrzeugräder als Hybridräder, speziell im Straßenbetrieb, unnötig hohe, ungefederte Massen ergeben, welche nachweislich äußerst nachteilig zum Fahrkomfort des jeweiligen Gefährts beitragen.

Es sind automatische Transportsysteme speziell für den Personenpendelverkehr auf stark befahrenen Strecken bekannt, die von einer oberhalb der Abrollebene der Räder verlegten Schiene geführt sind und auf einer ebenen Betontrasse oder auf Stegen auf Gummireifen fahren (US 4,969,400). Nachteilig bei diesen Systemen ist die Gestaltung von Abzweigungen im Sinne von Weichen, da dies aufgrund der oberhalb der Fahrbahn verlegten Führungsschiene nur mit einem hohen konstruktiven Aufwand verwirklichbar ist.

Eine andere bekannte Art von Personenshuttles sind die sogenannten Standseilbahnen, bei denen in einem mittig angeordneten Kanal ein Drahtseil zwischen den Schienen entlang der Strecke geführt wird, an welchem das eigentliche Fahrzeug entweder permanent festgeklemmt ist oder aber durch einen Greifer festgeklemmt wird. Speziell bei einer kurvigen Streckenführung weisen solche Systeme hohe Reibungsverluste auf, da das Kabel dann großflächig anliegt. Zudem ist bei solchen Systemen der Wartungsaufwand, welcher hauptsächlich durch die Kontrolle auf Schadhaftigkeit des Kabels entsteht, nicht unerheblich.

Schließlich sind auch Systeme bekannt, bei denen das Fahrzeug komplett in einer Rinne geführt wird, wodurch zwar ein bequemer ebener Ein- und ausstieg ermöglicht wird, allerdings mit dem Nachteil, dass bei der Verwendung von Luftkissenfahrzeugen in dieser Rille eine unnötig hohe Flächenversiegelung stattfindet.

Bekannt ist auch ein Transportsystem mit Hochgeschwindigkeitsfahrzeugen und automatischer Kontrolle, bei denen kleine Transportfahrzeuge, beispielsweise Passagierkabinen, Frachtlader und Fahrzeugplattformen, entlang einer elektrifizierten Fahrstrecke bewegt werden. angewendet werden. Die Fahrgestelle der Transportfahrzeuge fahren auf einem in einer kanalartigen Führungstrasse verlegten Schienensystem und werden durch ebenfalls in den Kanälen befindliche Energie- und Kontrollsysteme angetrieben und gesteuert. Personen werden in den Passagierkabinen befördert, während Kraftfahrzeuge auf die Fahrzeugplattformen verladen werden (US 5,590,604).

### Die Erfindung und ihre Vorteile

Das erfindungsgemäße Verkehrssystem mit den kennzeichnenden Merkmalen des Hauptanspruchs weist demgegenüber den Vorteil auf, dass es ohne aufwendige Ein- bzw. Ausschleusvorrichtungen sowohl mit systemeigenen (öffentlichen) Fahrzeugen als auch mit einschleusbaren Individualfahrzeugen zur Beförderung von Personen oder Gütern betrieben werden kann.

Der Betrieb des erfindungsgemäßen Verkehrssystems erfolgt vollautomatisch über mindestens einen Lenkungseingriff je Fahrzeug, der als aus- und einschwenkbare Energieabnahme- und Führungseinrichtung ausgeführt ist und mit einem zumindest im Bereich von Auf- und Abfahrtsstellen ebenso wie Kreuzungen oder Verzweigungen überrollbar auf bzw. in der Trasse, entweder zwischen den Rädern oder seitlich neben dem Fahrzeug angeordneten Energieversorgungs- und Führungssystem in Wirkverbindung steht, über das das Fahrzeug mit Energie versorgt wird. Selbstverständlich kann das erfindungsgemäße Verkehrssystem auch in vorhandene Fahrbahnen eingebaut werden. Dazu braucht nur das Energieversorgungs- und Führungssystem in eine in die Fahrbahn eingebrachte Rinne eingesetzt bzw. ein überrollbares Energieversorgungs- und Führungssystem auf der Fahrbahn fixiert zu werden. Aus Sicherheitsgründen werden die Individualfahrzeuge vor der Einfahrt in die Trasse des vollautomatischen Verkehrssystems einer automatischen Sicherheitsdiagnose unterzogen.

Die Auf- bzw. Abfahrstellen zu einer solchen Trasse sind ebene Platten, beispielsweise Betonplatten in welche Führungsschienen eingearbeitet sind. Die Trasse selbst besteht im wesentlichen aus zwei separaten Fahrstegen, welche entweder direkt auf dem Boden, einer Bodenplatte oder im Falle einer Hochbahnausführung auf Querträgern montiert werden. Die Trasse ist auch unterirdisch verlegbar.

Ein besonderer Vorteil des vollautomatischen Verkehrssystems besteht auch darin, dass Abzweigungen als passive Weichen, also ohne mechanisch bewegte Teile, ausgeführt werden können. Die Wahl der Richtung an einer Abzweigung wird vom Fahrzeug aus über die Energieabnahme- und Führungseinrichtung vorgegeben.

Durch die überrollbare Anordnung des Energieversorgungs- und Führungssystems lassen sich Verzweigungen, Kreuzungen, Auf- und Abfahrstellen sehr leicht verwirklichen. In einer vorteilhaften Ausgestaltung der Erfindung sind die Fahrwegelemente einfach als ebene Platten ausgeführt, in denen Kanäle für das Energieversorgungs- und Führungssystem vorgesehen sind. In einer diesbezüglichen anderen Variante kann das Energieversorgungs- und Führungssystem auch integraler Bestandteile dieser Platten sein. Durch das unmittelbar auf bzw. unter der Fahrbahnebene liegende Energieversorgungs- und Führungssystem wird die Problematik der Energieversorgung durch Oberleitungen, welche zum einen sehr teuer bei der Herstellung und Wartung sind und zum anderen beim Auf- und Abladen von Gutem eine erhebliche Gefahrenquelle darstellen, beispielsweise bei Kranarbeiten, umgangen und die Gefährdung vermieden, welche beispielsweise beim Betreten der Trasse zu Inspektionszwecken oder zu Wartungsarbeiten von oberhalb der Fahrbahn verlegten stromführenden Energieversorgungs- und Führungssystemen ausgeht.

Das Energieversorgungs- und Führungssystem weist mindestens einen stromführenden Pol zur Energieversorgung der Fahrzeuge auf, welcher von dem Energieabnahme- und Führungssystem mit einem Schleif- oder Rollenkontakt abgegriffen wird. Eine Ausgestaltungsmöglichkeit des Führungssystems besteht aus einem nach unten hin geschlossenen Kanal, um die Führungsschiene direkt, beispielsweise bei der Herstellung eines Betonteils, in Schalungen zur Herstellung integraler Bauteile einzulegen. Eine zweite Ausgestaltungsmöglichkeit des Führungssystems besteht aus einer in Längsrichtung zweigeteilten Ausführung, so dass beispielsweise bei einer Hochbahnausführung der Trasse Schmutz, welcher in den Führungsschlitz hineinfällt, durch einen Schlitz der zwischen den beiden die Führungsschiene bildenden Teilen bestehen bleibt, wiederum nach unten herausfallen kann.

Die Fahrzeuge verfügen über eine normale Straßenbereifung so dass insbesondere die Individualfahrzeuge neben den Trassen des erfindungsgemäßen Verkehrssystems auch normale Straßen befahren können. Hierfür ist die Energieabnahme- und Führungseinrichtung der Individualfahrzeuge in den Wirkungsbereich des Energieversorgungs- und Führungssystems der Trasse einschwenkbar. Außerdem sind die Fahrzeuge mit einem Energiespeicher ausgestattet, wodurch insbesondere der Energiebedarf für Fahrten zwischen beispielsweise Wohnort und Trassen-Auffahrt gedeckt wird. Es können beispielsweise auch Brennstoffzellenfahrzeuge, die unter Berücksichtigung der Energieversorgung speziell bei Langstreckenfahrten nur noch über relativ kleine Brennstoffzellen-Aggregate verfügen, das erfindungsgemäße Verkehrssystem nutzen, da die Aggregate nur noch für relativ kurze Distanzen zwischen den Trassenauf- bzw. - abfahrtsstellen und Start- bzw. Zielort ausgelegt werden müssen. Hierdurch trägt das erfindungsgemäße Verkehrssystem zur Gewichtsreduzierung der Individualfahrzeuge bei und ermöglicht so eine zusätzliche Energieeinsparung. Als Individualfahrzeuge sind auch Hybridfahrzeuge mit unterschiedlichen Antriebssystemen für das vollautomatische Verkehrssystem geeignet.
In einer weiteren vorteilhaften Ausgestaltung der Erfindung sind die Fahrstege, also der die Laufflächen der Räder der Individualfahrzeuge tragende Untergrund, in ihrem Querschnitt konkav ausgebildet. Dies kann zu einer verbesserten Führung der Fahrzeugräder beitragen. Außerhalb von Ein- bzw. Ausschleusungen, Verzweigungen sowie Kreuzungen kann dieser konkave Querschnitt zu einem rinnenförmigen Querschnitt erweitert sein. Die Fahrstege weisen in diesem Fall in ihren Randbereichen hochgezogene Wulste auf, so dass das beim Abrollen der Fahrzeugräder entstehende Fahrgeräusch durch diese Wulst, sowohl an der äußeren als auch an der inneren Begrenzung der einzelnen Fahrstege, nach oben in Richtung des Radkastens eines auf der Trasse fahrenden Fahrzeuges abgestrahlt wird. Die Radkästen der Fahrzeuge sind zur Reduzierung der Schallemission mit einem schallabsorbierenden Dämmmaterial ausgekleidet, so dass das von der Fahrbahn nach oben abgestrahlte Abrollgeräusch gedämpft und wieder in Richtung Fahrstegoberfläche reflektiert wird.

In einer weiteren Ausgestaltung der Erfindung ist es aber auch möglich, die Innenseite der Wülste mit einem schallabsorbierenden Dämmmaterial auszukleiden. Hierzu bietet es sich an, die bezogen auf die Fahrzeugräder äußeren Wulste höher zu gestalten als die jeweils der Innenseite der Fahrzeugräder zugewandten Wulste. Schon alleine diese Maßnahme trägt zur Verminderung der seitlichen Schallabstrahlung bei.

In einer weiteren vorteilhaften Ausgestaltung der Erfindung sind die Laufflächen für die Fahrzeugräder mit einem verschleißfesten Belag versehen. Günstig stellt sich diesbezüglich eine Variante dar, den verschleißfesten Belag austauschbar auf die Lauffläche aufzubringen. Verschlissene Belagstellen könnten dann leicht ausgetauscht werden. Das aufwendige Abfräsen der Fahrbahn wäre nicht mehr erforderlich. Ferner kann auf diese Weise auch der unterschiedlichen Beanspruchung der Lauffläche im Gegensatz zu dem tragenden Fahrweguntergrund Rechnung getragen und für beide Teile die hinsichtlich Preis und Lebensdauer optimalen Werkstoffe ausgewählt werden.

In einer weiteren vorteilhaften Ausgestaltung der Erfindung kann das Verkehrssystem sehr vorteilhaft als aufgeständerte Trasse realisiert werden. Hierzu werden entlang der Trasse Stützen im Boden verankert und auf ihrem freien Ende Querträger befestigt. Auf diesen werden dann die Fahrwegelemente mit den Laufflächen verlegt.

Eine besonders vorteilhafte Ausgestaltung der Erfindung sieht vor, dass über die Energiezufuhr durch das Energieversorgungs- und Führungssystem und die in dieses eingreifende Energieabnahme- und Führungseinrichtung zusätzlich zur Energieversorgung auch Steuerbefehle für die Individualfahrzeug übermittelt werden.

Eine andere vorteilhafte Ausgestaltung der Erfindung sieht vor, neben den Steuerbefehlen auch die Übertragung von Informationsdiensten wie beispielsweise TV, Radio oder Internet über die Führungsschiene zu ermöglichen und darüber hinaus auch Kommunikationsdienstleistungen zu integrieren.

Eine weitere vorteilhafte Ausgestaltung der Erfindung sieht vor, die Individualfahrzeuge im Fahrverband fahren zu lassen. Hierzu sind die Individualfahrzeuge mit einem Steuer- und Regelsystem ausgerüstet, das es ihnen ermöglicht, in gleichbleibendem, dichten Abstand hintereinander her zu fahren. Die strömungsgünstigere Anordnung der Fahrzeuge im Verband hat den Vorteil, dass zur Fortbewegung weniger Energie benötigt wird als die einzelnen Fahrzeuge im Individualbetrieb verbrauchen würden. Ein Fahrverband kann sowohl aus Personen- als auch Lastentransportfahrzeugen bestehen. In einer diesbezüglichen vorteilhaften Ausgestaltung der Erfindung sind Lastencontainer ohne eigenes Antriebssystem zwischen zwei Individualfahrzeugen angeordnet.

Bei dem erfindungsgemäßen Verkehrssystem ist als besonders vorteilhaft anzusehen, dass der Bedarf an elektrischer Energie nicht an einem Ort stattfindet, sondern sich speziell entlang einer Fernverbindungstrasse über ein weites Gebiet entlang einer solchen Trasse erstreckt. Ergänzend zu dem erfindungsgemäßen Transportsystems können daher entlang der Trasse Anlagen zur dezentralen Versorgung des Verkehrsweges mit elektrischer Energie aus erneuerbaren Quellen, wie beispielsweise Windkraftanlagen oder dgl., aufgestellt werden.

Das erfindungsgemäße Verkehrssystem erlaubt darüber hinaus, aufgrund der Energieversorgung auf elektrischer Basis, die Rückspeisung von Energie ins Netz, welche beispielsweise bei Bremsvorgängen freigesetzt wird, welche so anderen sich auf der Trasse befindenden Fahrzeugen direkt zur Verfügung steht. So können beispielsweise bergab fahrende Fahrzeuge ihre bei herkömmlichen Verkehrssystemen als Wärmeverlust auftretende Verzögerungsarbeit bergauf fahrenden Fahrzeugen über den Umweg des Transfers von elektrischer Energie zur Verfügung stellen.

Weitere Vorteile und vorteilhafte Ausgestaltungen der Erfindung sind der nachfolgenden Beschreibung der Ausführungsbeispiele, der Zeichnung und den Ansprüchen entnehmbar.

### Zeichnung

Zwei Ausführungsbeispiele des erfindungsgemäßen Verkehrssystems sind vereinfacht in der Zeichnung dargestellt und werden im Folgenden näher erläutert. Es zeigen:
- Fig. 1: einen Querschnitt durch eine vierspurige und auf allen Spuren befahrene Trasse als erstes Ausführungsbeispiel und als zweites Ausführungsbeispiel
- Fig. 2: einen gemischten Fahrzeugverband in der Seitenansicht.

### Beschreibung des Ausführungsbeispiels

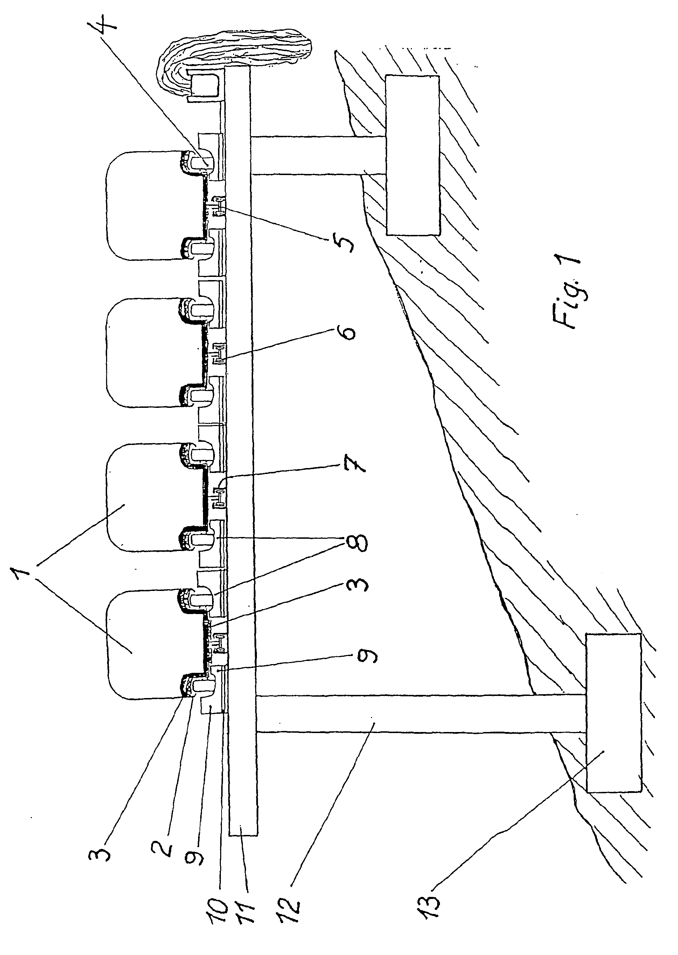

In Figur 1 sind Fahrzeuge 1 dargestellt, deren Unterboden, insbesondere in den Radkästen 2, mit einem schallabsorbierenden Material 3 ausgekleidet ist. Die Fahrzeuge 1 verfügen über eine für Straßenfahrzeuge übliche Bereifung 4, wodurch es möglich ist, die Fahrzeuge 1 sowohl auf normalen Verkehrswegen, als auch in Verbindung mit dem erfindungsgemäßen Verkehrssystem einzusetzen. Die Fahrzeuge 1 verfügen mittig zwischen den Rädern der gelenkten Achse über eine aus- und einschwenkbare Lenkungs- und Energieversorgungseinrichtung 5, die mindestens einen Abgriff 6 aufweist, über welche die Fahrzeuge sowohl mit elektrischer Energie für den Antrieb, als auch mit Steuersignalen und wahlweise mit Informations- und Kommunikationsdienstleistungen versorgt werden können. Die Lenkungs- und Energieversorgungseinrichtung 5 greift in eine Führungsschiene 7 ein, welche unterhalb der Abrollebene der Räder verlegt ist. Im Ausführungsbeispiel, bei dem es sich um eine Hochbahnausführung handelt, ist die Führungsschiene 7 zweigeteilt und nach unten hin offen. Die Fahrzeuge 1 rollen auf Fahrstegen 8 die an ihrer Oberseite so ausgebildet sind, dass das durch das Abrollen der Fahrzeugreifen entstehende Abrollgeräusch nach oben in Richtung der mit schallabsorbierendem Material 3 ausgekleideten Radkästen 2 abgestrahlt wird. Hierzu sind die Fahrstege 8 seitlich durch hochgezogene Wulste 9 begrenzt, wobei die äußeren Wulste 9 im vorliegenden Beispiel höher sind als die der Innenseite der Räder zugewandten Wulste 9. Die Fahrstege 8 sind über eine schwingungsdämpfende Zwischenlage 10 auf dem Fahrbahnuntergrund gelagert. In der Hochbahnausführung gemäß Figur 1 besteht dieser Fahrbahnuntergrund aus in gleichen Abständen aufgelegten Querstreben 11, welche auf Stützen 12 mit Abstand über dem Boden aufgestockt gelagert sind. Die Stützen 12 sind so tief im Erdreich verankert, dass deren Fundamente 13 frostfrei verlegt sind. Zur Realisierung von Kurvenüberhöhungen sind die Querstreben 11 sägezahnartig ausgeführt, so dass die außenliegende Fahrbahn höher liegt als die innere.

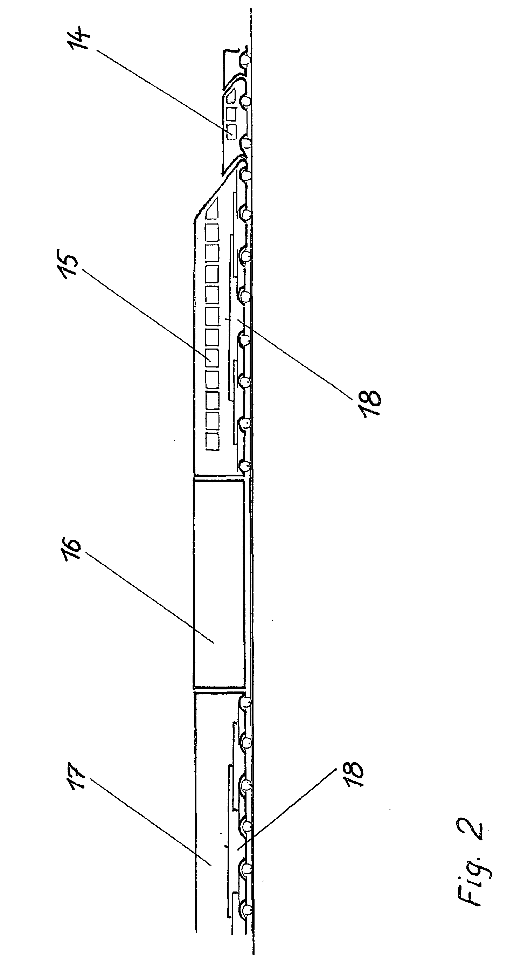

Das in Figur 2 gezeigt zweite Ausführungsbeispiel betrifft einen Fahrzeugverband, bestehend aus Individualfahrzeugen 14 und einem öffentlichen Personentransportfahrzeug 15, welches nicht näher dargestellte Mittel zum Einhängen eines Lastcontainer 16 aufweist. Da der Lastcontainer 16 über kein eigenes Fahrwerk verfügt, wird er an seinem hinteren Ende von einem Lastfahrzeug 17 getragen. Sowohl reine Lastfahrzeuge 17 als auch Personentransportfahrzeuge 15 sind so ausgebildet, dass sie sowohl Führungs-, als auch Nachfolgefahrzeug in einem Transportverband mit eingefügten Lastcontainern 16 sein können. Die Transportfahrzeuge sind dabei so ausgestaltet, dass die zusätzliche Last, welche durch das Zwischenhängen von Lastcontainern 16 auf deren Fahrwerke 18 ausgeübt wird, wie schematisch angedeutet, gleichmäßig auf alle Achsen verteilt wird.

### Bezugszeilenliste

- 1.: Fahrzeug
- 2.: Radkasten
- 3.: Schallabsorbierendes Material
- 4.: Bereifung
- 5.: Lenkungs- und Energieversorgungseinrichtung
- 6.: Abgriffe
- 7.: Führungsschiene
- 8.: Fahrsteg
- 9.: Wulst
- 10.: Schwingungsdämpfende Lagerung
- 11.: Querstreben
- 12.: Stütze
- 13.: Fundament
- 14.: Individualfahrzeug
- 15.: Personentransportfahrzeug
- 16.: Lastcontainer
- 17.: Lastfahrzeug
- 18.: Fahrwerk

## Patentansprüche

1. Vollautomatisches Verkehrssystem
- mit systemeigenen Fahrzeugen sowie einschleusbaren Individualfahrzeugen zur Beförderung von Personen und Gütern, wobei die einschleusbaren Individualfahrzeuge über ein eigenes Antriebssystem, eine eigene Lenkungseinrichtung und mindestens eine zwischen oder neben den Radspuren angeordnete Energieabnahme- und Führungseinrichtung verfügen,
- mit einer Trasse, bestehend aus einem die Laufflächen für die Räder der Individualfahrzeuge bildenden festen Untergrund, und einem zumindest im Bereich von Auf- und Abfahrstellen ebenso wie Kreuzungen oder Verzweigungen überrollbaren Energieversorgungs- und Führungssystem, das innerhalb eines zwischen den Laufflächen befindlichen Kanals angeordnet ist, wobei die mindestens eine Energieabnahme- und Führungseinrichtung der Individualfahrzeuge mit dem Energieversorgungs- und Führungssystem der Trasse in Wirkverbindung steht und der feste Untergrund aus separat anordenbaren und/oder die Laufflächen für die Räder der Individualfahrzeuge tragende verlegbaren Fahrwegelementen (8) besteht, und
- mit Auf- und Abfahrstellen für die Individualfahrzeuge
**dadurch gekennzeichnet,**
**dass** die mindestens eine Energieabnahme- und Führungseinrichtung (6) der einschleusbaren Individualfahrzeuge (1, 14, 15, 17) in den Wirkbereich des Energieversorgungs- und Führungssystems (7) im Kanal der Trasse ein- und aus diesem wieder ausfahrbar ist.

2. Verkehrssystem nach Anspruch 1,
**dadurch gekennzeichnet,**
**dass** die Laufflächen (8) zur Führung der Fahrzeugräder (4) im Querschnitt konkav ausgebildet sind.

3. Verkehrssystem nach Anspruch 2,
**dadurch gekennzeichnet,**
**dass** die Laufflächen (8) außerhalb von Ein- bzw. Ausschleusungen, Verzweigungen sowie Kreuzungen in ihren Randbereichen hochgezogene Wulste (9) aufweisen.

4. Verkehrssystem nach Anspruch 3,
**dadurch gekennzeichnet,**
**dass** die bezogen auf die Fahrzeugräder (4) äußeren Wulste (9) höher sind als die an die Innenseite der Fahrzeugräder (4) grenzenden Wulste (9).

5. Verkehrssystem nach Anspruch 3 und 4,
**dadurch gekennzeichnet,**
**dass** die Innenfläche der an die Außenseite der Fahrzeugräder (4) grenzenden Wulste (9) mit einem schallabsorbierenden Belag versehen sind.

6. Verkehrssystem nach einem der Ansprüche 1 bis 4,
**dadurch gekennzeichnet,**
**dass** die Unterseite der Individualfahrzeuge (1, 14, 15, 17), z. B. deren Radkästen (2), mit einem schallabsorbierenden Belag (3) versehen sind.

7. Verkehrssystem nach einem der Ansprüche 1 bis 6,
**dadurch gekennzeichnet,**
**dass** die Laufflächen (8) mit einem verschleißfesten Belag versehen sind.

8. Verkehrssystem nach Anspruch 7,
**dadurch gekennzeichnet,**
**dass** der verschleißfeste Belag austauschbar ist.

9. Verkehrssystem nach Anspruch 1,
**dadurch gekennzeichnet,**
**dass** die Trasse auf auf Stützen (12) ruhenden Querträgern (11) montiert ist.

10. Verkehrssystem nach Anspruch 1,
**dadurch gekennzeichnet,**
**dass** über das Energieversorgungs- und Führungssystem (7) zusätzlich zur Antriebsenergie Steuersignale für die Individualfahrzeuge (1, 14, 15, 17) übertragbar sind.

11. Verkehrssystem nach Anspruch 1,
**dadurch gekennzeichnet,**
**dass** das Energieversorgungs- und Führungssystem (7) zur Übertragung von Kommunikations- und Informationssignalen dient.

12. Verkehrs system nach einem der vorhergehenden Ansprüche,
**dadurch gekennzeichnet,**
**dass** die Individualfahrzeuge (1, 14, 15, 17) in Fahrverbänden dicht hintereinander fahren.

13. Verkehrssystem nach einem der vorhergehenden Ansprüche,
**dadurch gekennzeichnet,**
**dass** die Individualfahrzeuge (1, 14, 15, 17) über ein Abstandsregelsystem verfügen.

14. Verkehrssystem nach Anspruch 12 und 13,
**dadurch gekennzeichnet,**
**dass** zur Bildung eines Lasttransportverbandes Lastencontainer (16) zwischen zwei Individualfahrzeuge (15, 17) anordenbar sind.

## Claims

1. A fully automatic traffic system
- comprising system-inherent vehicles as well as insertable individual vehicles for transporting persons and goods, wherein the insertable individual vehicles are provided with their own drive system, their own steering mechanism and with at least one power decrease and guiding mechanism arranged between or next to the wheel tracks,
- comprising a route consisting of a solid ground, which forms the running surfaces for the wheels of the individual vehicles and a power supply and guiding system which can be driven over at least in the area of access and exit ramps as well as intersections or junctions and which is arranged within a conduit located between the running surfaces, wherein the at least one power decrease and guiding system of the individual vehicles is operatively connected to the power supply and guiding system of the route and wherein the solid ground, which supports the running surfaces for the wheels of the individual vehicles consists of roadway elements (8), which can be separately arranged and/or laid and
- comprising access and exit ramps for the individual vehicles,
**characterized in**
**that** the at least one power decrease and guiding device (6) of the insertable individual vehicles (1, 14, 15, 17) can be deployed into and retracted from the effective range of the power supply and guiding system (7) in the conduit of the route.

2. The traffic system according to claim 1,
**characterized in**
**that** the running surfaces (8) for guiding the vehicle wheels (4) are embodied so as to be concave in their cross section.

3. The traffic system according to claim 2,
**characterized in**
**that** the border regions of the running surfaces (8) encompass bulges (9), which extend upwards outside of access and exit ramps, respectively, junctions as well as intersections.

4. The traffic system according to claim 3,
**characterized in**
**that** the outer bulges (9) relating to the vehicle wheels (4) are higher than the bulges (9) abutting on the interior of the vehicle wheels (4).

5. The traffic system according to claim 3 and 4,
**characterized in**
**that** the inner surface of the bulges (9) abutting on the outside of the vehicle wheels (4) is provided with a sound absorbing lining.

6. The traffic system according to one of claims 1 to 4,
**characterized in**
**that** the underside of the individual vehicles (1, 14, 15, 17), e.g. the wheel cases (2) thereof, is provided with a sound absorbing lining (3).

7. The traffic system according to one of claims 1 to 6,
**characterized in**
**that** the running surfaces (8) are provided with a wear resistant lining.

8. The traffic system according to claim 7,
**characterized in**
**that** the wear resistant lining can be replaced.

9. The traffic system according to claim 1,
**characterized in**
**that** the route is mounted on cross beams (11), which rest on supports (12).

10. The traffic system according to claim 1,
**characterized in**
**that**, in addition to the drive power, control signals for the individual vehicles (1, 14, 15, 17) can be transmitted via the power supply and guiding system (7).

11. The traffic system according to claim 1,
**characterized in**
**that** the power supply and guiding system (7) serves the purpose of transmitting communication and information signals.

12. The traffic system according to one of the preceding claims,
**characterized in**
**that** the individual vehicles (1, 14, 15, 17) drive closely behind one another in driving formations.

13. The traffic system according to one of the preceding claims,
**characterized in**
**that** the individual vehicles (1, 14, 15, 17) are provided with a distance control system.

14. The traffic system according to claim 12 and 13,
**characterized in**
**that** freight containers (16) can be arranged between two individual vehicles (15, 17) for the purpose of forming a load-transporting formation.

## Revendications

1. Système de transport entièrement automatisé,
- comportant des véhicules propres au système ainsi que des véhicules individuels pouvant être insérés pour le transport de personnes et de biens, moyennant quoi les véhicules individuels insérables disposent d'un système d'entraînement propre, d'un dispositif de direction propre et d'au moins un dispositif de captage d'énergie et de guidage disposé entre ou à côté des roulements,
- comportant une voie, constituée d'un sol solide formant les surfaces de roulements pour les roues des véhicules individuels, et un système d'alimentation en énergie électrique et de guidage pouvant être retenu au moins au niveau des emplacements d'accès et de desserte ainsi qu'aux croisements ou embranchements, lequel est disposé à l'intérieur d'un canal se trouvant entre les surfaces de roulements, moyennant quoi au moins un dispositif de captage d'énergie et de guidage des véhicules individuels est en liaison opérationnelle avec le système d'alimentation en énergie électrique et de guidage de la voie et le sol solide supportant les surfaces de roulement pour les roues des véhicules individuels est constitué d'éléments de parcours de conduite (8) pouvant être agencés et/ou placés séparément, et
- comportant des emplacements d'accès et de desserte pour les véhicules individuels,
**caractérisé en ce que**
au moins un dispositif de captage d'énergie et de guidage (6) des véhicules individuels (1, 14, 15, 17) insérables dans la plage utile du système d'alimentation en énergie électrique et de guidage (7) peut être déployé dans le canal de la voie et à nouveau rétracté de celui-ci.

2. Système de transport selon la revendication 1,
**caractérisé en ce que**
les surfaces de roulement (8) sont réalisées avec une section transversale concave afin de guider les roues du véhicule (4).

3. Système de transport selon la revendication 2,
**caractérisé en ce que**
les surfaces de roulement (8) présentent à l'extérieur des inclusions, respectivement des exclusions, des embranchements ainsi que des croisements des bourrelets (9) rehaussés dans leurs zones de bord.

4. Système de transport selon la revendication 3,
**caractérisé en ce que**
les bourrelets (9) extérieurs sont plus hauts par rapport aux roues du véhicule (4) que les bourrelets (9) adjacents au côté interne des roues du véhicule (4).

5. Système de transport selon la revendication 3 et 4,
**caractérisé en ce que**
les surfaces internes des bourrelets (9) adjacents au côté extérieur des roues du véhicule (4) sont pourvues d'un revêtement insonorisant.

6. Système de transport selon une des revendications 1 à 4,
**caractérisé en ce que**
les côtés inférieurs des véhicules individuels (1, 14, 15, 17), par exemple de leurs caissons de roues (2), sont pourvus d'un revêtement (3) insonorisant.

7. Système de transport selon une des revendications 1 à 6,
**caractérisé en ce que**
les surfaces de roulement (8) sont pourvues d'un revêtement résistant à l'usure.

8. Systèmes de transport selon la revendication 7,
**caractérisé en ce que**
le revêtement résistant à l'usure peut être remplacé.

9. Système de transport selon la revendication 1,
**caractérisé en ce que**
la voie est montée sur des entretoises (11) reposant sur des montants (12).

10. Système de transport selon la revendication 1,
**caractérisé en ce que**
par l'intermédiaire du système d'alimentation en énergie électrique et de guidage (7), des signaux de commande destinés aux véhicules individuels (1,14,15,17) peuvent être transmis en plus de l'énergie motrice.

11. Système de transport selon la revendication 1,
**caractérisé en ce que**
le système d'alimentation en énergie électrique et de guidage (7) sert à transmettre des signaux de communication et d'information.

12. Système de transport selon une des revendications précédentes,
**caractérisé en ce que**
les véhicules individuels (1, 14, 15, 17) circulent en convois de transport denses les uns derrière les autres.

13. Système de transport selon une des revendications précédentes,
**caractérisé en ce que**
les véhicules individuels (1, 14, 15, 17) disposent d'un système de réglage des écarts.

14. Système de transport selon la revendication 12 et 13,
**caractérisé en ce que**
afin de former un convoi de transport de fret, des containers de fret (16) peuvent être disposés entre deux véhicules individuels (15, 17).
